# EUROPÄISCHE PATENTSCHRIFT

(11) **EP 3 268 637 B1**
(45) Veröffentlichungstag und Bekanntmachung des Hinweises auf die Patenterteilung: **24.03.2021**
(21) Anmeldenummer: 16704815.6
(22) Anmeldetag: 08.02.2016
(51) Int. Cl.: F16H 61/04, B61C 9/38, B60L 15/00, B60L 3/10

(54) **ANTRIEBSSYSTEM UND VERFAHREN ZUR STEUERUNG EINES SCHALTVORGANGES**
DRIVE SYSTEM AND METHOD FOR CONTROLLING SHIFTING
SYSTÈME D'ENTRAÎNEMENT ET PROCÉDÉ DE COMMANDE D'UN PROCESSUS DE COMMUTATION

(30) Priorität: 10.03.2015 DE 102015204256
(43) Veröffentlichungstag der Anmeldung: 17.01.2018
(73) Patentinhaber: ZF Friedrichshafen AG, 88046 Friedrichshafen (DE)
(72) Erfinder: IUCHI, Kazutaka, 88677 Markdorf (DE); LEGNER, Jürgen, 88048 Friedrichshafen (DE)
(74) Vertreter: ZF Friedrichshafen AG
(86) Internationale Anmeldenummer: PCT/EP2016/052582
(87) Internationale Veröffentlichungsnummer: WO 2016/142112

(56) Entgegenhaltungen:
- EP-A2- 1 393 950
- DE-A1-102006 019 239
- DE-B- 1 177 671
- FR-A1- 2 946 291

## Beschreibung

Die Erfindung betrifft ein Antriebssystem und ein Verfahren zur Steuerung eines Schaltvorganges in einem elektromotorisch angetriebenen Schienenfahrzeug.

In jüngerer Zeit bestehen Bestrebungen elektromotorisch betriebene Antriebssysteme von Schienenfahrzeugen mit Schaltgetrieben auszustatten, sodass mehrere Übersetzungen bzw. Gangstufen verfügbar sind. Dadurch sollen die elektrischen Antriebsmaschinen immer in einem günstigen Wirkungsgradbereich betrieben werden, sodass sich ein geringerer Energieverbrauch ergibt. Die hier genannten elektrischen Antriebsmaschinen eines Schienenfahrzeuges, die die wesentliche Leistung für den Antrieb des Schienenfahrzeuges bereitstellen werden auch Traktionsmotoren genannt.

Ferner sind elektromotorisch angetriebene Schienenfahrzeuge bekannt, bei denen mehrere jeweils einer oder mehreren Antriebsachsen bzw. Radsätzen zugeordnete Elektromotoren über einen gemeinsamen Wechselstrom-Umrichter gespeist werden. Dabei sind also mehrere elektrische Antriebsmaschinen elektrisch parallel geschaltet, sodass die elektrischen Antriebsmaschinen von dem gemeinsamen Wechselstrom-Umrichter fortlaufend die gleichen Drehzahl- und/oder Drehmomentvorgaben erhalten.

Aufgrund von Toleranzen bei der Fertigung und aufgrund von unterschiedlichen Verschleißzuständen weisen die Radscheiben verschiedener Radsätze an einem Schienenfahrzeug unterschiedliche Durchmesser auf. Dadurch ergeben sich geringfügig unterschiedliche Abtriebsdrehzahlen an den einzelnen Radsätzen, trotz der von einem gemeinsamen Wechselstrom-Umrichter für mehrere elektrische Antriebsmaschinen bzw. Traktionsmotoren vorgegebenen gemeinsamen Drehzahl- und Drehmomentvorgaben. Theoretisch stehen demnach einer einheitlichen, von dem gemeinsamen Wechselstrom-Umrichter vorgegebenen Antriebsdrehzahl unterschiedliche abtriebsseitige Drehzahlen an den einzelnen Antriebssträngen gegenüber. Es entsteht also eine Drehzahldifferenz zwischen einer vorgegebenen Antriebsdrehzahl am Antriebsmotor und einer Abtriebsdrehzahl an zumindest einem der Antriebsstränge.

Eine erste Möglichkeit die beschriebenen Drehzahldifferenzen auszugleichen besteht darin, die Elektromotoren als Asynchronmaschinen auszuführen. Dabei können die beschriebenen Drehzahldifferenzen über den Schlupf in den parallel geschalteten Elektromotoren ausgeglichen werden, weil Asynchronmaschinen bauartbedingt einen Schlupf aufweisen, der lastabhängig veränderbar ist. Als Schlupf in den Elektromotoren wird hier eine Drehzahldifferenz zwischen dem vom Stator erzeugten Drehfeld und dem Rotor verstanden.

Eine zweite Möglichkeit die beschriebenen Drehzahldifferenzen auszugleichen ist aus der EP 1393950 A2 bekannt. Darin ist ein Triebfahrwerk für Schienenfahrzeuge beschrieben, bei dem mehrere parallel geschaltete, permanenterregte Synchronmotoren unterschiedliche Radsätze antreiben. Dabei ist durch die drehzahlstarre Kopplung der parallel geschalteten Synchronmotoren eine elektrische Schlupfkupplung wie beim Asynchronmotor nicht gegeben. Stattdessen sollen hier die speziellen Eigenschaften des Rad-Schiene-Kontakts ausgenutzt werden, indem die beschriebenen Raddurchmesserdifferenzen und die daraus folgenden Drehzahldifferenzen durch mechanischen Schlupf zwischen Rad und Schiene kompensiert werden.

Bei beiden beschriebenen Möglichkeiten zum Ausgleich der beschriebenen Drehzahldifferenzen an mehreren Radsätzen entstehen Spannungen und mechanische Belastungen in den über einen gemeinsamen Wechselstrom-Umrichter und mehrere elektrische Antriebsmaschinen angetriebenen Antriebssträngen.

Auch bei den eingangs beschriebenen, elektromotorisch betriebenen Antriebssystemen von Schienenfahrzeugen mit Schaltgetrieben sollen aus Kostengründen mehrere elektrische Antriebsmaschinen über einen Wechselstrom-Umrichter gespeist werden. Die beschriebenen Drehzahldifferenzen und die dadurch verursachten Spannungen treten auch in diesen schaltbaren Antriebssystemen bzw. Antriebssträngen auf. Derartige Spannungen bzw. Verspannungen im Antriebsstrang verursachen jedoch Probleme beim Schalten der Gangstufen in den Schaltgetrieben, insbesondere bei formschlüssigen Schaltkupplungen. Beispielsweise können bestimmte Schaltungen gar nicht oder nur verzögert durchgeführt werden, weil die miteinander in Eingriff zu bringenden Schaltklauen oder Kupplungsverzahnungen beim Einkuppeln mit unterschiedlichen Drehzahlen rotieren. Dadurch können an den Schaltklauen und Kupplungsverzahnungen auch mechanische Schäden verursacht werden. Bedingt durch das hohe Trägheitsmoment sowohl der antriebsseitigen als auch der abtriebsseitigen Antriebsstrangteile eines Schienenfahrzeuges können die formschlüssigen Elemente einer Schaltkupplung im Extremfall bereits bei einem nicht exakt synchronisierten Schaltvorgang zerstört werden, beispielsweise durch das Abscheren einzelner oder aller Klauen einer Klauenschaltkupplung.

Es ist daher die Aufgabe der vorliegenden Erfindung ein Antriebssystem eines Schienenfahrzeuges mit elektrischen Antriebsmaschinen anzugeben, bei dem mehrere elektrische Antriebsmaschinen über einen gemeinsamen Wechselstrom-Umrichter gespeist werden, und bei dem jeder der genannten Antriebsmaschinen jeweils ein Schaltgetriebe zugeordnet ist. Ferner soll ein entsprechendes Verfahren zur Schaltsteuerung zumindest eines automatisierten Schaltgetriebes in einem elektromotorisch angetriebenen Schienenfahrzeug angegeben werden.

Die Lösung dieser Aufgaben wird erreicht durch ein Antriebssystem gemäß Anspruch 1 und durch ein Verfahren gemäß den Merkmalen von Anspruch 7. Vorteilhafte Ausgestaltungen und Weiterbildungen gehen aus den jeweiligen abhängigen Ansprüchen hervor.

Demnach wird ein Antriebssystem eines Schienenfahrzeuges mit mehreren Antriebssträngen beansprucht, bei dem die Antriebsstränge jeweils eine elektrische Antriebsmaschine und ein Schaltgetriebe mit zumindest einer formschlüssigen Schaltkupplung zur Realisierung mehrerer Übersetzungsverhältnisse aufweisen. Die elektrischen Antriebsmaschinen werden dabei über einen gemeinsamen Wechselstrom-Umrichter gespeist, sodass den gemeinsam angesteuerten elektrischen Antriebsmaschinen eine gemeinsame Solldrehzahl vorgegeben wird, die einer gemeinsamen Eingangsdrehzahl an den zugeordneten Schaltgetrieben und Schaltkupplungen entspricht. Des Weiteren weist zumindest ein Antriebsstrang des Antriebssystems ein Teillastschaltelement auf, zum Synchronisieren einer Eingangsdrehzahl mit einer Abtriebsdrehzahl an der formschlüssigen Schaltkupplung.

Das genannte Teillastschaltelement kann als lastschaltbares Schaltelement ausgebildet sein und dient dazu, die eingangs genannten Drehzahldifferenzen während eines Schaltvorgangs auszugleichen und so den Schaltvorgang zu beschleunigen und zu verbessern. Ein solcher Schaltvorgang kann dabei das Umschalten des Übersetzungsverhältnisses in mehreren Schaltgetrieben des Antriebssystems umfassen. Das Umschalten mehrerer Schaltgetriebe des Antriebssystems geschieht dabei gleichzeitig oder innerhalb eines kurzen Zeitraums von beispielsweise weniger als einer Sekunde. Unter dem Begriff Umschalten wird ein Schaltvorgang verstanden, bei dem ein Ursprungsgang ausgelegt und ein Zielgang eingelegt wird.

Die elektrischen Antriebsmaschinen sind beispielsweise als Asynchronmotoren ausgebildet. Eine separate Anfahrkupplung zwischen Antriebsmaschine und Schaltgetriebe ist nicht erforderlich, weil die elektrischen Antriebsmaschinen in jeder Betriebsphase die erforderliche Antriebsleistung bzw. das erforderliche Antriebsdrehmoment zur Verfügung stellen können und im Vergleich zu Verbrennungsmotoren schneller auf Regelvorgaben reagieren und daher präziser und schneller regelbar sind.

Die gemeinsame Ansteuerung mehrerer elektrischer Antriebsmaschinen über einen gemeinsamen Wechselstrom-Umrichter umfasst beispielsweise eine Ausführung, bei der zwei elektrische Antriebsmaschinen über einen gemeinsamen Wechselstrom-Umrichter gespeist bzw. angesteuert werden, wobei jede der beiden elektrischen Antriebsmaschinen jeweils einen von zwei Radsätzen eines Drehgestells des Schienenfahrzeuges antreibt. Ebenso ist es möglich vier elektrische Antriebsmaschinen über einen gemeinsamen Wechselstrom-Umrichter zu speisen bzw. anzusteuern, wobei jeweils zwei elektrische Antriebsmaschinen einem Drehgestell mit zwei daran angeordneten Radsätzen zugeordnet sind. Des Weiteren kann eine andere Anzahl und andere Zuordnung von mehreren elektrischen Antriebsmaschinen zu einem Wechselstrom-Umrichter vorgesehen werden.

Gemäß der Erfindung ist das Teillastschaltelement in einem Abtriebsbereich des Antriebsstranges, das heißt zwischen der formschlüssigen Schaltkupplung des Schaltgetriebes und zumindest einem Schienenrad, angeordnet.

Besonders bevorzugt kann dabei eine ohnehin an dem Antriebsstrang angeordnete Betriebsbremse des Schienenfahrzeuges verwendet werden. Dazu kann die Betriebsbremse des Schienenfahrzeuges derart ausgestaltet und ansteuerbar werden, dass sie die Funktion des Teillastschaltelementes mit übernehmen kann. Die Betriebsbremse kann damit sowohl zum verkehrsbedingten Abbremsen des Schienenfahrzeuges als auch zum Synchronisieren von Schaltvorgängen in dem Schaltgetriebe durch Abbremsen des Schienenfahrzeuges verwendet werden. Durch diese Mehrfachfunktion der Betriebsbremse wird der zusätzliche Aufwand für das vorgeschlagene Antriebssystem verringert.

Beim Synchronisieren mit Hilfe eines im Abtriebsbereich des Antriebsstranges angeordneten Teillastschaltelementes kann durch Abbremsen der abtriebsseitigen Antriebsstrangteile ein Gleichlauf von der Eingangsdrehzahl mit der Abtriebsdrehzahl an der jeweiligen formschlüssigen Schaltkupplung erreicht werden. Abhängig von einem eventuell auftretenden Schlupf zwischen den Schienenrädern und den Schienen kann dabei das Schienenfahrzeug kurzzeitig mit abgebremst werden oder es wird bewusst ein kurzzeitiger Schlupf zwischen Schienenrad und Schiene in Kauf genommen.

Gemäß einer nicht erfindungsgemäßen Ausführungsform ist das Teillastschaltelement in einem Antriebsbereich des Antriebsstranges angeordnet. Das heißt, dass das Teillastschaltelement zwischen der elektrischen Antriebsmaschine und der formschlüssigen Schaltkupplung des Schaltgetriebes angeordnet ist. Beim Synchronisieren mit Hilfe eines im Antriebsbereich des Antriebsstranges angeordneten Teillastschaltelementes kann durch Abbremsen der antriebsseitigen Antriebsstrangteile ein Gleichlauf der Eingangsdrehzahl mit der Abtriebsdrehzahl an der jeweiligen formschlüssigen Schaltkupplung erreicht werden.

Eine weitere nicht erfindungsgemäße Ausführung sieht vor, dass das Teillastschaltelement zusammen mit der formschlüssigen Schaltkupplung als eine Baueinheit ausgeführt ist.

Besonders bevorzugt kann das Teillastschaltelement zusammen mit der formschlüssigen Schaltkupplung als eine sogenannte Lastschaltklaue ausgeführt sein. Mit anderen Worten ist dabei das Teillastschaltelement in der Schaltkupplung integriert. Derartige Schaltkupplung ist beispielsweise in der DE 10101864 A1 beschrieben.

Als Teillastschaltelement kann vorzugsweise ein Reibschaltelement zum Beispiel in Lamellenbauweise verwendet werden. Insbesondere eine Lamellenbremse kann vorgesehen werden. Aufgrund der hohen Trägheitsmomente, die bei den beschriebenen Synchronisiervorgängen kontrolliert bzw. überwunden werden müssen, bietet sich der Einsatz von Mehrscheibenlamellenbremsen an, die für entsprechend hohe Bremslasten ausgelegt werden können.

Eine mögliche Bauform solcher Reibschaltelemente ist beispielsweise in der DE 102014200854.9 beschrieben. Dabei ist zumindest ein einem ersten Träger, zum Beispiel einem Innenlamellenträger, zugeordnetes erstes Reibelement und zumindest ein einem zweiten Träger, zum Beispiel einem Außenlamellenträger, zugeordnetes zweites Reibelement vorgesehen, wobei das erste Reibelement und das zweite Reibelement als Reibpartner mit sich überdeckenden Reibflächen zur Drehmomentübertragung in Kontakt bringbar sind. Mehrere Reibelemente bilden ein Lamellenpaket, wobei erste und zweite Reibelemente abwechselnd axial hintereinander angeordnet sind und über eine Betätigung im geschlossenen Zustand des Reibschaltelementes gegeneinander gepresst werden, um die Drehmomentübertragung jeweils zwischen den Paketen von ersten und zweiten Reibelementen zu realisieren. Ferner kann dabei vorgesehen sein, dass das erste oder das zweite Reibelement eine etwa ringförmig ausgeführte Reibfläche aufweist, wobei das jeweils andere Reibelement als korrespondierende Reibfläche zumindest ein radial in den Überdeckungsbereich kragendes Reibflächenelement aufweist.

Auf diese Weise wird die Kontaktfläche bzw. die korrespondierenden Reibflächen zwischen den beiden Reibungselementen reduziert, indem in Umfangsrichtung die Reibfläche durch das Vorsehen einzelner Reibnasen oder Reibzähne an einem der Reibelemente mehrfach unterbrochen wird. Die Unterbrechungen in Umfangsrichtung werden z.B. durch Aussparungen zwischen vorgesehenen Reibflächenelementen bzw. Reibnasen oder Reibzähne realisiert. Demzufolge sind die miteinander in Reibschluss bringbaren ersten und zweiten Reibelemente, abgesehen von den jeweils vorkragenden Reibflächenelementen, in radialer Richtung zur Reduzierung der sich überdeckenden Reibflächen voneinander beabstandet. Hierdurch kann ein Kühl- und Schmiermittel, zum Beispiel Öl oder dergleichen nahezu ungehindert radial durchströmen. Des Weiteren wird die Kontaktfläche, in der durch Scherung des Kühl- und Schmiermittels Schleppmomente erzeugt werden, auf ein Minimum begrenzt.

Im Rahmen der vorliegenden Erfindung kann vorgesehen sein, dass nicht jeder der über einen gemeinsamen Wechselstrom-Umrichter angetriebenen Antriebsstränge ein Teillastschaltelement aufweist. So kann bei einer Anordnung, bei der zwei elektrische Antriebsmaschinen über einen gemeinsamen Wechselstrom-Umrichter gespeist werden, nur an einem der dazugehörigen Antriebsstränge ein Teillastschaltelement vorgesehen sein. In diesem Fall kann die Synchronisierung an der formschlüssige Schaltkupplung in dem Antriebsstrang ohne Teillastschaltelement allein durch das exakte Ansteuern der Gleichlaufdrehzahl über den gemeinsamen Wechselstrom-Umrichter und die dazugehörige elektrische Antriebsmaschine erfolgen, während in dem anderen Antriebsstrang mit abweichender Abtriebsdrehzahl die Synchronisierung mittels des dort angeordneten Teillastschaltelements erfolgt. Das heißt, dass der erforderliche Ausgleich von den abweichenden Abtriebsdrehzahlen an den beiden Antriebssträngen während des Umschaltens mehrerer Schaltgetriebe des Antriebssystems zu 100% von dem einen Teillastschaltelement bewirkt wird.

Daneben ist es bei einer anderen Ausführung jedoch auch möglich, dass der erforderliche Ausgleich der abweichenden Abtriebsdrehzahlen an mehreren Antriebssträngen während des Umschaltens der Schaltgetriebe des Antriebssystems anteilig von mehreren Teillastschaltelementen bewirkt wird. Dazu ist vorgesehen, dass bevorzugt jeder Antriebsstrang, dessen elektrische Antriebsmaschine über den gemeinsamen Wechselstrom-Umrichter gespeist wird, ein Teillastschaltelement aufweist. Besonders bevorzugt wird der genannte Ausgleich der Differenzdrehzahlen gleichmäßig auf die beteiligten Teillastschaltelemente aufgeteilt.

Zum Zwecke der Steuerung und Regelung der Schaltvorgänge umfasst das Antriebssystem bevorzugt eine elektronische Steuereinrichtung, einen Drehzahlsensor zum Erfassen der jeweiligen Abtriebsdrehzahl an jedem Antriebsstrang und jeweils einen Aktuator zum Betätigen des formschlüssigen Schaltelementes jedes Schaltgetriebes. Ferner ist die elektronische Steuereinrichtung signalübertragend mit den Drehzahlsensoren und mit den Aktuatoren verbunden.

Mit Hilfe der Drehzahlsensoren kann die jeweilige Abtriebsdrehzahl an jedem der Antriebsstränge bzw. Schaltgetriebe erfasst werden. Die der jeweiligen Drehzahl entsprechenden Daten werden der Steuereinrichtung zugeleitet und können von dieser bei der Ansteuerung der Aktuatoren zum Betätigen des formschlüssigen Schaltelementes verwendet werden. Die Abtriebsdrehzahl kann entweder die Drehzahl einer Getriebeabtriebswelle des Schaltgetriebes selbst sein oder die Drehzahl eines mit einem festen Drehzahlverhältnis zu der Getriebeabtriebswelle rotierenden Elementes im Abtriebsbereich des Antriebsstranges. Die von dem Drehzahlsensor erfasste Drehzahl kann erforderlichenfalls entsprechend dem festen Drehzahlverhältnis von einer Steuereinrichtung umrechnet werden, sodass sie schließlich der an der formschlüssigen Schaltkupplung anliegenden Abtriebsdrehzahl entspricht, welche mit der antriebsseitigen Eingangsdrehzahl synchronisiert werden muss.

Vorzugsweise umfasst das Antriebssystem des Weiteren jeweils einen weiteren Aktuator zum Betätigen jedes Teillastschaltelements, wobei jeder der weiteren Aktuatoren ebenfalls mit der elektronischen Steuereinrichtung signalübertragend verbunden ist. Die elektronische Steuereinrichtung kann so mit Hilfe der Aktuatoren einen im Folgenden beschriebenen Schaltvorgang steuern und regeln, bei dem die genannten Aktuatoren zu ganz bestimmten Zeitpunkten betätigt werden.

Das beschriebene Teillastschaltelement kann im offenen und/oder geschlossenen Zustand auch verriegelbar sein, um so einen über längere Zeit anhaltenden Energieeinsatz für das Offen- bzw. Geschlossen halten des Teillastschaltelementes zu vermeiden.

Des Weiteren wird ein Verfahren zur Steuerung eines Schaltvorganges in einem oben beschriebenen Antriebssystem vorgeschlagen. Das Verfahren weist folgende Verfahrensschritte auf:
a) Die elektrischen Antriebsmaschinen werden über den gemeinsamen Wechselstrom-Umrichter so gespeist, dass das Getriebeeingangsmoment an den Schaltkupplungen in den Schaltgetrieben gleich Null ist oder zumindest unterhalb eines zur Schaltung der jeweiligen formschlüssigen Schaltkupplung maximal zulässigen Getriebeeingangsmomentes liegt;
b) Die formschlüssigen Schaltkupplungen werden in eine Neutralstellung geschaltet;
c) Die Abtriebsdrehzahl wird an jedem Antriebsstrang einzeln erfasst und an die elektronische Steuereinrichtung geleitet;
d) Eine von dem gemeinsamen Wechselstrom-Umrichter vorgegebene Eingangsdrehzahl und die Abtriebsdrehzahlen werden durch die elektrischen Antriebsmaschinen an allen formschlüssigen Schaltkupplungen gemeinsam grobsynchronisiert;
e) Die Eingangsdrehzahl und die jeweilige Abtriebsdrehzahl werden an jeder formschlüssigen Schaltkupplung separat durch das jeweils zugeordnete Teillastschaltelement feinsynchronisiert;
f) Die formschlüssigen Schaltkupplungen werden geschlossen.

Mit Hilfe eines solchen Verfahrens ist es möglich einen Schaltvorgang an mehreren Schaltgetrieben, die von gemeinsam angesteuerten elektrischen Antriebsmaschinen angetrieben werden, schnell und betriebssicher durchzuführen.

Alternativ zu der im Verfahrensschritt c) beschriebenen separaten Erfassung der Abtriebsdrehzahl bei jedem Schaltvorgang kann die Abtriebsdrehzahl auch kontinuierlich bzw. in regelmäßigen kurzen Zeitabständen erfasst und der Steuereinrichtung zugeleitet werden, sodass in der Steuereinrichtung dauernd Daten zur momentanen Abtriebsdrehzahl vorliegen. In diesem Fall kann auf den separaten Verfahrensschritt c) bei jedem Schaltvorgang verzichtet werden.

Die Eingangsdrehzahl ist die Drehzahl, mit der der antriebsseitige Teil der Schaltkupplung rotiert und die Abtriebsdrehzahl ist die Drehzahl, mit der der abtriebsseitige Teil der Schaltkupplung rotiert. D.h. nach dem Einkuppeln liegt zwangsläufig über den Formschluss der Schaltkupplung die exakte Synchrondrehzahl vor, bei der die Eingangsdrehzahl gleich der Abtriebsdrehzahl ist. Als Eingangsdrehzahl kann beispielsweise eine in der Steuerung erfasste Motordrehzahl der elektrischen Antriebsmaschine verwendet werden. Alternativ kann für das vorgeschlagene Verfahren auch jeweils ein separater Drehzahlsensor die Eingangsdrehzahl und die Abtriebsdrehzahl erfassen und entsprechende Drehzahlsignale oder Drehzahldaten an die Steuereinrichtung weiterleiten.

Vorzugsweise werden dabei zum Grobsynchronisieren ein erstes gemeinsames Zieldrehzahlfenster für die Eingangsdrehzahl aller gemeinsam angesteuerten Antriebsstränge und zum Feinsynchronisieren ein separates zweites Zieldrehzahlfenster für die Eingangsdrehzahl an jeder formschlüssigen Schaltkupplungen vorgegeben. Das erste Zieldrehzahlfenster ist dabei breiter als das zweite Zieldrehzahlfenster. Das dem Grobsynchronisieren zugeordnete erste breitere Zieldrehzahlfenster lässt demnach noch größere Abweichungen von einer exakten Synchrondrehzahl zu, wogegen das beim Feinsynchronisieren verwendete engere zweite Zieldrehzahlfenster nur geringe oder gar keine messbaren Drehzahlabweichungen von der exakten Synchrondrehzahl zulässt.

Auf diese Weise kann das problemlose Einrücken der formschlüssigen Schaltkupplung erreicht werden, indem beim Erreichen des zweiten Zieldrehzahlfensters an einer der formschlüssigen Schaltkupplungen der jeweils zugeordnete Aktuator von der Steuereinrichtung zum Schließen der jeweiligen Schaltkupplung angesteuert wird.

Beim Erreichen des ersten Zieldrehzahlfensters kann an zumindest einer der formschlüssigen Schaltkupplungen der folgende Verfahrensschritt der Feinsynchronisierung eingeleitet werden, indem der jeweilige weitere Aktuator zum Betätigen des zugeordneten Teillastschaltelements von der Steuereinrichtung so angesteuert wird, dass die Feinsynchronisierung erfolgt. Bei der Feinsynchronisierung wird die Eingangsdrehzahl zumindest soweit der jeweiligen Abtriebsdrehzahl angenähert, dass die Eingangsdrehzahl in dem engeren, zweiten Zieldrehzahlfenster liegt. Beim Feinsynchronisieren werden die Schaltkupplungen der beteiligten Antriebsstränge also separat voneinander synchronisiert. Das bedeutet wiederum, dass möglicherweise trotz gleichzeitig eingeleitetem Schaltvorgang an mehreren Schaltgetrieben das Einrücken der formschlüssigen Schaltkupplung mit einem zeitlichen Versatz geschieht. Die Größe des zeitlichen Versatzes bzw. die Verzögerung zwischen den Schaltungen an den einzelnen Schaltkupplungen ist dabei abhängig von der Größe der Abweichung zwischen den Abtriebsdrehzahlen an den beteiligten Antriebssträngen.

Vorteilhaft können die Verzögerungen zwischen einzelnen Schaltvorgängen mit Hilfe der Teillastschaltelemente so gesteuert werden, dass Zugkraftunterbrechungen an den über einen gemeinsamen Wechselrichter angesteuerten Antriebssträngen gezielt minimiert werden. Dazu werden einzelne Verfahrensschritte von der elektronischen Steuereinrichtung derart verzögert, dass das Umschalten der einzelnen Schaltkupplungen des Antriebssystems nacheinander erfolgt. D.h. dass die Zeiträume, in dem die Antriebsverbindung unterbrochen ist, an den einzelnen Antriebssträngen eines Antriebssystems zeitlich gegeneinander verschoben sind.

Darüber hinaus lassen sich Zugkraftunterbrechung bei einem Schienenfahrzeug mit mehreren Antriebssystemen dadurch vermeiden, dass die einzelnen Antriebssysteme zeitlich nacheinander umgeschaltet werden.

Mit den beschriebenen Verfahren können beispielsweise elektrische Triebzüge, sogenannte Electrical-Multiple-Units (EMU) vorteilhaft betrieben werden. Unter einem Triebzug ist in der Regel eine nicht trennbare Einheit aus mehreren Fahrzeugen/Zugsegmenten zu verstehen, wobei der Triebzug über einen fahrzeugeigenen Antrieb verfügt. Dabei können ein Fahrzeug/Zugsegment, mehrere Fahrzeuge/Zugsemente oder alle Fahrzeuge/Zugsegmente des Triebzugs jeweils über einen oder mehrere Antriebsstränge verfügen.

Die Erfindung wird nachfolgend anhand der beigefügten Figuren beispielhaft näher erläutert. Dabei zeigen:
- Fig. 1: eine schematische Darstellung zweier Drehgestelle eines Schienenfahrzeuges, bei dem jeweils zwei Antriebsachsen über einen Wechselstrom-Umrichter antreibbar sind,
- Fig. 2: eine schematische Darstellung zweier Drehgestelle eines Schienenfahrzeuges, bei dem vier Antriebsachsen über einen WechselstromUmrichter antreibbar sind und
- Fig. 3: ein schematisch dargestelltes Antriebsystem eines Schienenfahrzeuges gemäß der Erfindung.

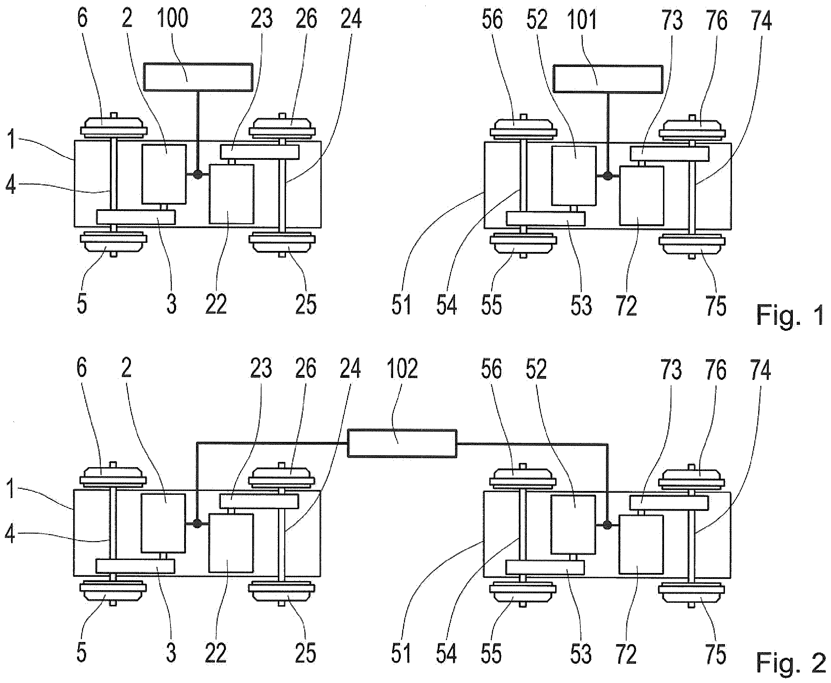

Die Fig. 1 zeigt ein erstes Drehgestell 1 und ein zweites Drehgestell 51, die im Unterbau eines Schienenfahrzeuges angeordnet sind. Jedes Drehgestell 1, 51 weist zwei Antriebsstränge auf. Jeder Antriebsstrang umfasst jeweils eine elektrische Antriebsmaschine 2, 22, 52, 72 und jeweils ein Schaltgetriebe 3, 23, 53, 73 zum Antreiben jeweils einer Radsatzwelle 4, 24, 54, 74 mit mehreren möglichen Übersetzungsverhältnissen. Die beiden jeweils einem Drehgestell zugeordneten elektrischen Antriebsmaschinen 2 und 22 bzw. 52 und 72 werden dabei über einen gemeinsamen Wechselstrom-Umrichter 100 bzw. 101 gespeist. Von den Schaltgetrieben 3, 23, 53, 73 wird die Antriebsleistung weiter übertragen auf die jeweils zugeordnete Radsatzwelle 4, 24, 54, 74 und auf die darauf angeordneten Schienenräder 5, 6, 25, 26, 55, 56, 75, 76. Jeweils die beiden einem Drehgestell 1, 51 zugeordneten elektrischen Antriebsmaschinen 2, 22, 52, 72 werden über einen gemeinsamen Wechselstrom-Umrichter 100 bzw. 101 gespeist.

Die Fig. 2 zeigt ebenfalls zwei Drehgestelle 1 und 51 im Unterbau eines Schienenfahrzeuges, mit mechanisch gleich aufgebauten Antriebssträngen wie in Fig. 1. Das Antriebssystem der Fig. 2 unterscheidet sich vom Antriebssystem der Fig. 1 dadurch, dass alle vier elektrischen Antriebsmaschinen 2, 22, 52 und 72 über nur einen gemeinsamen Wechselstrom-Umrichter 102 gespeist werden.

Die gemeinsamen Wechselstrom-Umrichter 100, 101 und 102 geben den ihnen jeweils zugeordneten elektrischen Antriebsmaschinen jeweils dieselbe Drehzahl- und Drehmomentvorgaben zur gleichen Zeit.

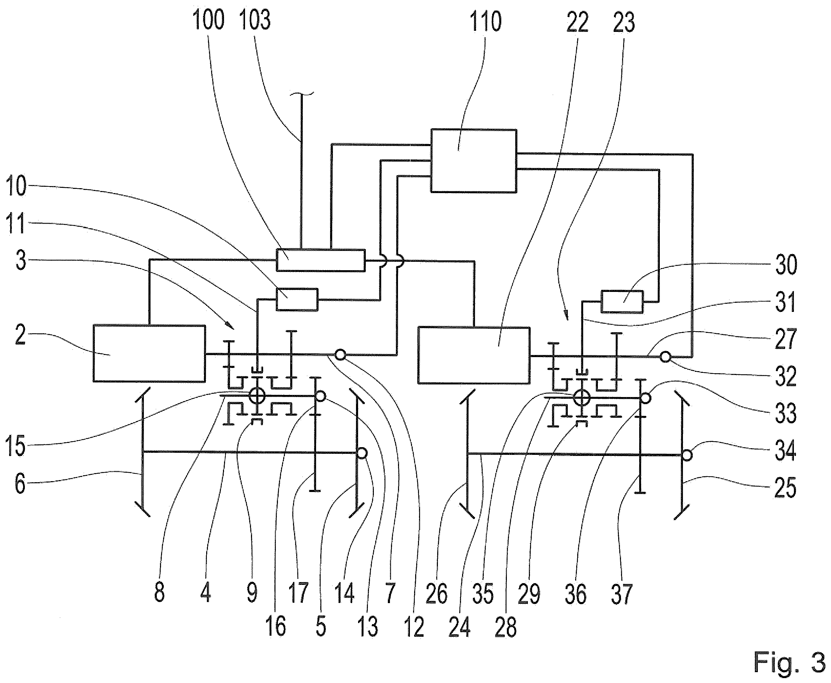

In der Fig. 3 sind die beiden Antriebsstränge detaillierter dargestellt, die dem ersten Drehgestell 1 der Fig. 1 zugeordnet sind und deren elektrische Antriebsmaschinen 2, 22 über den gemeinsamen Wechselstrom-Umrichter 100 angesteuert werden. Der gemeinsamen Wechselstrom-Umrichter wird über eine Stromversorgung 103 mit der erforderlichen elektrischen Energie versorgt.

Die Fig. 3 zeigt ferner, dass die beiden Schaltgetriebe 3 und 23 jeweils als Stirnradgetriebe in Vorgelegewellenbauweise ausgeführt sind. Jedes der beiden Schaltgetriebe 2 und 23 weist eine Eingangswelle 7 bzw. 27 und eine Abtriebswelle 8 bzw. 28 auf, die über zwei verschieden übersetzende Stirnradpaare wahlweise antriebswirksam miteinander verbindbar sind.

Zum Umschalten der Übersetzungs- bzw. Gangstufen ist eine formschlüssige Schaltkupplung 9, 29 in jedem der Schaltgetriebe 3 und 23 vorgesehen. Die Schaltkupplungen 9, 29 sind jeweils durch einen Aktuator 10, 30 betätigbar. Schaltelemente 11, 31 wie Schaltstangen, Mitnehmer und/oder Schaltgabeln übertragen die vom Aktuator 10, 30 ausgeführte Schaltbewegung auf die formschlüssige Schaltkupplung 9, 29 bzw. deren Schiebemuffe. Der Aktuator 10, 30 kann beispielsweise pneumatisch, hydraulisch, elektromotorisch oder elektromagnetisch betätigbar ausgeführt sein. Jede der formschlüssigen Schaltkupplungen 9, 29 weist drei Schaltstellungen auf, nämlich eine mittlere Neutralstellung, in der die mechanische Antriebsverbindung unterbrochen ist, und zwei Gangschaltstellungen, in denen der Antriebsstrang mit unterschiedlichen Übersetzungsverhältnissen geschlossen ist. Das heißt, in den Gangschaltstellungen besteht eine mechanische Antriebsverbindung zwischen der elektrischen Antriebsmaschine 2 und den zugeordneten Schienenrädern 5, 6.

Beide Antriebsstränge des Antriebssystems weisen ferner jeweils ein Teillastschaltelement 12, 32 zum Synchronisieren einer Eingangsdrehzahl mit einer Abtriebsdrehzahl in dem jeweiligen Schaltgetriebe 3, 23 auf. Das Teillastschaltelement ist in dieser nicht erfindungsgemäßen

Ausführungsform auf der Eingangswelle 7 bzw. 27 des Schaltgetriebes 3 angeordnet. Es befindet sich somit im Antriebsbereich des Antriebsstranges, das heißt zwischen der elektrischen Antriebsmaschine 2 und der formschlüssigen Schaltkupplung 9 des Schaltgetriebes 3. Die Teillastschaltelemente 13, 23 können beispielsweise jeweils als eine Lamellenbremse ausgeführt sein. Die weiteren Aktuatoren zum Betätigen der Teillastschalelemente 13, 23 sind nicht dargestellt. Die weiteren Aktuatoren können wie die Aktuatoren der formschlüssigen Kupplungen beispielsweise pneumatisch, hydraulisch, elektromotorisch oder elektromagnetisch betätigbar ausgeführt sein.

Grundsätzlich ist genau ein Teillastschaltelement in jedem Antriebsstrang, dessen elektrische Antriebsmaschine über den gemeinsamen Wechselstrom-Umrichter gespeist wird, vorgesehen. Dieses eine Teillastschaltelement kann an verschiedenen Positionen in dem Antriebsstrang angeordnet sein. Neben der oben beschriebenen Anordnung des Teillastschaltelementes auf der Eingangswelle des jeweils zugeordneten Schaltgetriebes sind auch die in der Fig. 3 eingezeichneten Teillastschaltelementpositionen 13, 14, 15 und 33, 34, 35 möglich.

Dabei sind die erfindungsgemäße Positionen 13, 14, 33 und 34 im Abtriebsbereich des Antriebsstranges, das heißt zwischen der formschlüssigen Schaltkupplung des Schaltgetriebes und den Schienenrädern, angeordnet. Bei dieser abtriebsseitigen Anordnung kann beispielsweise eine an dem Antriebsstrang angeordnete Betriebsbremse des Schienenfahrzeuges als Teillastschaltelement verwendet werden. Damit können einzelne Schaltvorgänge durch Abbremsen des Schienenfahrzeuges synchronisiert werden.

Eine weitere nicht erfindungsgemäße mögliche Position für das Teillastschaltelement ist mit dem Bezugszeichen 15 bzw. 35 gekennzeichnet. Bei einer solchen Ausführung ist das Teillastschaltelement in der Schaltkupplung integriert, d.h. es ist zusammen mit der formschlüssigen Schaltkupplung 9 als eine Baueinheit ausgeführt. Derartige Schalteinheiten werden beispielsweise als Lastschaltklaue bezeichnet.

Die Schaltvorgänge in den Schaltgetrieben werden mit Hilfe einer elektronischen Steuereinrichtung 110 gesteuert. Dabei kann es sich beispielsweise um ein Zugsteuergerät zum Steuern der Schaltvorgänge des gesamten Zuges handeln. Die Steuereinrichtung 110 ist jeweils mit dem ihr zugeordneten Wechselstrom-Umrichter 100, mit den Aktuatoren 10, 30 und mit den Teillastschaltelementen 12, 32 bzw. deren Aktuatoren signalübertragend verbunden, sodass die genannten Elemente des Antriebssystems von der Steuereinrichtung 110 angesteuert werden können.

Der Steuereinrichtung 110 liegen ferner Information über die Drehzahl im Antriebsbereich und im Abtriebsbereich jedes ihr zugeordneten Antriebsstranges vor. Die Steuereinrichtung 110 kennt also die Eingangsdrehzahl und die Abtriebsdrehzahl an jeder zu schaltenden formschlüssigen Schaltkupplung. Diese Drehzahlinformationen können der Steuereinrichtung 110 beispielsweise von direkt an der jeweiligen Eingangswelle 7, 27 und der jeweiligen Getriebeabtriebswelle 8, 28 angeordneten Drehzahlsensoren übermittelt werden. Dem Fachmann sind eine Vielzahl verschiedener Arten von Drehzahlsensoren und deren Anordnung in einem Antriebssystem zur Erfassung der gewünschten Drehzahlen bekannt. Daher sind die Drehzahlsensoren hier nicht näher beschrieben und in den vorliegenden Figuren nicht dargestellt. Mit Hilfe der Information über die Drehzahl im Antriebsbereich und im Abtriebsbereich jedes Antriebsstranges steuert die Steuereinrichtung 110 die Schaltvorgänge in den ihr zugeordneten Schaltgetrieben 3, 23. Dabei synchronisiert die Steuereinrichtung 110 die Eingangsdrehzahl und die Abtriebsdrehzahl an der jeweiligen formschlüssigen Schaltkupplung 9, 29 mit Hilfe der elektrischen Antriebsmaschinen 2, 22 und der Teillastschaltelemente 12, 32. Nach der Synchronisierung wird die jeweilige Schaltkupplung 9, 29 durch die Aktuatoren 10, 30 wieder geschlossen, wobei auch die Aktuatoren 10, 30 von der Steuereinrichtung 110 angesteuert werden. Die Synchronisierung erfolgt in zwei aufeinanderfolgenden Verfahrensschritten mit einer Grobsynchronisierung und einer Feinsynchronisierung, wie es im Folgenden näher beschrieben ist.

Ein Umschaltvorgang in mehreren Antriebssträngen, deren elektrische Antriebsmaschinen über einen gemeinsamen Wechselstrom-Umrichter gespeist werden, wird von der elektronischen Steuereinrichtung 110 in folgenden aufeinanderfolgenden Verfahrensschritten gesteuert.

Zunächst wird der gemeinsame Wechselstrom-Umrichter 100 so angesteuert, dass er den einzelnen elektrischen Antriebsmaschinen 2, 22 jeweils eine Drehzahl vorgibt, bei der das Getriebeeingangsmoment an den Schaltkupplungen in den Schaltgetrieben gleich Null ist oder zumindest unterhalb eines zur Schaltung der jeweiligen formschlüssigen Schaltkupplung 9, 29 maximal zulässigen Getriebeeingangsmomentes liegt. Danach werden die Aktuatoren der formschlüssigen Schaltkupplungen so angesteuert, dass diese die jeweilige Schaltkupplung in eine Neutralstellung umschalten. Währenddessen oder danach wird die Abtriebsdrehzahl an jedem Antriebsstrang einzeln erfasst und an die elektronische Steuereinrichtung geleitet. Die Steuereinrichtung grobsynchronisiert danach die Eingangsdrehzahl und die Abtriebsdrehzahl durch die über den gemeinsamen Wechselstrom-Umrichter gespeisten elektrischen Antriebsmaschinen an allen formschlüssigen Schaltkupplungen gemeinsam, d.h. die Eingangsdrehzahl und die Abtriebsdrehzahlen werden in ein breites erstes Zieldrehzahlfenster gebracht.

Danach werden die Eingangsdrehzahl und die jeweilige Abtriebsdrehzahl an jeder formschlüssigen Schaltkupplung 9, 29 separat durch das jeweils zugeordnete Teillastschaltelement 12, 32 feinsynchronisiert, wobei die Eingangsdrehzahl und/oder die Abtriebsdrehzahl in ein gegenüber dem ersten Zieldrehzahlfenster engeres zweites Zieldrehzahlfenster gebracht werden. D.h. der antriebsseitige Teil der formschlüssigen Schaltkupplung 9 rotiert nach dem Feinsynchronisieren zumindest nahezu mit der gleichen Drehzahl wie der abtriebsseitige Teil, sodass danach die jeweilige formschlüssige Schaltkupplung 9 schnell und problemlos geschlossen werden kann, indem die elektronische Steuereinrichtung 110 den jeweils zugeordneten Aktuator 10, 30 entsprechend ansteuert.

### Bezugszeichen

- 1: Drehgestell
- 2: elektrische Antriebsmaschine
- 3: Schaltgetriebe
- 4: Radsatzwelle
- 5: Schienenrad
- 6: Schienenrad
- 7: Eingangswelle
- 8: Getriebeabtriebswelle
- 9: formschlüssige Schaltkupplung
- 10: Aktuator
- 11: Schaltelement
- 12: Teillastschaltelement
- 13: Teillastschaltelementposition
- 14: Teillastschaltelementposition
- 15: Teillastschaltelementposition
- 16: Abtriebsritzel
- 17: Radsatzwellenzahnrad

- 22: elektrische Antriebsmaschine
- 23: Schaltgetriebe
- 24: Radsatzwelle
- 25: Schienenrad
- 26: Schienenrad
- 27: Eingangswelle
- 28: Getriebeabtriebswelle
- 29: formschlüssige Schaltkupplung
- 30: Aktuator
- 31: Schaltelement
- 32: Teillastschaltelement
- 33: Teillastschaltelementposition
- 34: Teillastschaltelementposition
- 35: Teillastschaltelementposition
- 36: Abtriebsritzel
- 37: Radsatzwellenzahnrad

- 51: Drehgestell
- 52: elektrische Antriebsmaschine
- 53: Schaltgetriebe
- 54: Radsatzwelle
- 55: Schienenrad
- 56: Schienenrad

- 72: elektrische Antriebsmaschine
- 73: Schaltgetriebe
- 74: Radsatzwelle
- 75: Schienenrad
- 76: Schienenrad

- 100: Wechselstrom-Umrichter
- 101: Wechselstrom-Umrichter
- 102: Wechselstrom-Umrichter
- 103: Stromzufuhr

- 110: Steuereinrichtung

## Patentansprüche

1. Antriebssystem eines Schienenfahrzeuges mit mehreren Antriebssträngen, die jeweils eine elektrische Antriebsmaschine (2, 22) und ein Schaltgetriebe (3, 23) mit zumindest einer formschlüssigen Schaltkupplung (9, 29) zur Realisierung mehrerer Übersetzungsverhältnisse aufweisen, wobei die elektrischen Antriebsmaschinen über einen gemeinsamen Wechselstrom-Umrichter gespeist werden, **dadurch gekennzeichnet, dass** zumindest ein Antriebsstrang des Antriebssystems ein Teillastschaltelement aufweist, zum Synchronisieren einer Eingangsdrehzahl mit einer Abtriebsdrehzahl an der formschlüssigen Schaltkupplung und dass das Teillastschaltelemen (13, 14, 33, 34) in einem Abtriebsbereich des Antriebsstranges, das heißt zwischen der formschlüssigen Schaltkupplung des Schaltgetriebes und zumindest einem Schienenrad, angeordnet ist.

2. Antriebssystem nach Anspruch 1, **dadurch gekennzeichnet, dass** eine Betriebsbremse des Schienenfahrzeuges derart ausgestaltet und ansteuerbar ist, dass sie die Funktion des Teillastschaltelementes mit übernehmen kann.

3. Antriebssystem nach einem der vorgenannten Ansprüche, **dadurch gekennzeichnet, dass** das Teillastschaltelement als Lamellenbremse ausgeführt ist.

4. Antriebssystem nach einem der vorgenannten Ansprüche, **dadurch gekennzeichnet, dass** jeder Antriebsstrang, dessen elektrische Antriebsmaschine über den gemeinsamen Wechselstrom-Umrichter gespeist wird, ein Teillastschaltelement aufweist.

5. Antriebssystem nach einem der vorgenannten Ansprüche, **dadurch gekennzeichnet, dass** das Antriebssystem eine elektronische Steuereinrichtung, einen Drehzahlsensor zum Erfassen der jeweiligen Abtriebsdrehzahl an jedem Antriebsstrang und jeweils einen Aktuator zum Betätigen des formschlüssigen Schaltelementes jedes Schaltgetriebes umfasst, und dass die elektronische Steuereinrichtung signalübertragend mit den Drehzahlsensoren und mit den Aktuatoren verbunden ist.

6. Antriebssystem nach Anspruch 5, **dadurch gekennzeichnet, dass** das Antriebssystem jeweils einen weiteren Aktuator zum Betätigen jedes Teillastschaltelements umfasst, und dass jeder der weitere Aktuatoren mit der elektronischen Steuereinrichtung signalübertragend verbunden ist.

7. Verfahren zur Steuerung eines Schaltvorganges in einem Antriebssystem gemäß Anspruch 5 oder 6. **gekennzeichnet durch** die folgenden Verfahrensschritte:
a) Die elektrischen Antriebsmaschinen werden über den gemeinsamen Wechselstrom-Umrichter so gespeist, dass das Getriebeeingangsmoment an den Schaltkupplungen in den Schaltgetrieben gleich Null ist oder zumindest unterhalb eines zur Schaltung der jeweiligen formschlüssigen Schaltkupplung maximal zulässigen Getriebeeingangsmomentes liegt;
b) Die formschlüssigen Schaltkupplungen werden in eine Neutralstellung geschaltet;
c) Die Abtriebsdrehzahl wird an jedem Antriebsstrang einzeln erfasst und an die elektronische Steuereinrichtung geleitet;
d) Eine von dem gemeinsamen Wechselstrom-Umrichter vorgegebene Eingangsdrehzahl und die Abtriebsdrehzahlen werden durch die elektrischen Antriebsmaschinen an allen formschlüssigen Schaltkupplungen gemeinsam grobsynchronisiert;
e) Die Eingangsdrehzahl und die jeweilige Abtriebsdrehzahl werden an jeder formschlüssigen Schaltkupplung separat durch das jeweils zugeordnete Teillastschaltelement feinsynchronisiert;
f) Die formschlüssigen Schaltkupplungen werden geschlossen.

8. Verfahren nach Anspruch 7, **dadurch gekennzeichnet, dass** zum Grobsynchronisieren im Verfahrensschritt d) ein erstes gemeinsames Zieldrehzahlfenster für die Eingangsdrehzahl aller gemeinsam angesteuerten Antriebsstränge, und dass zum Feinsynchronisieren im Verfahrensschritt e) ein separates zweites Zieldrehzahlfenster für die Eingangsdrehzahl an jeder formschlüssigen Schaltkupplungen vorgegeben wird, wobei das erste Zieldrehzahlfenster breiter ist als die zweiten Zieldrehzahlfenster.

9. Verfahren nach Anspruch 8, **dadurch gekennzeichnet, dass** beim Erreichen des ersten Zieldrehzahlfensters an zumindest einer der formschlüssigen Schaltkupplungen der folgende Verfahrensschritt der Feinsynchronisierung eingeleitet wird, indem der jeweilige weitere Aktuator zum Betätigen des zugeordneten Teillastschaltelements von der Steuereinrichtung so angesteuert wird, dass die Feinsynchronisierung erfolgt.

10. Verfahren nach Anspruch 8 oder 9, **dadurch gekennzeichnet, dass** beim Erreichen des zweiten Zieldrehzahlfensters an einer der formschlüssigen Schaltkupplungen der jeweils zugeordnete Aktuator von der Steuereinrichtung zum Schließen der jeweiligen Schaltkupplung angesteuert wird.

11. Verfahren nach einem der vorgenannten Ansprüche, **dadurch gekennzeichnet, dass** einzelne Verfahrensschritte von der elektronischen Steuereinrichtung derart verzögert werden, dass die Zugkraftunterbrechung im jeweiligen Antriebssystem minimiert werden, indem das Umschalten der einzelnen Schaltkupplungen des Antriebssystems nacheinander erfolgt.

## Claims

1. Drive system of a rail vehicle with a plurality of drive trains which in each case have an electric drive machine (2, 22) and a shifting transmission (3, 23) with at least one positively locking shifting clutch (9, 29) for realising a plurality of transmission ratios, the electric drive machines being fed via a common AC converter, **characterized in that** at least one drive train of the drive system has a partially power-shifting element, for the synchronization of an input rotational speed with an output rotational speed at the positively locking shifting clutch, and **in that** the partially power-shifting element (13, 14, 33, 34) is arranged in an output region of the drive train, that is to say between the positively locking shifting clutch of the shifting transmission and at least one rail wheel.

2. Drive system according to Claim 1, **characterized in that** a service brake of the rail vehicle is configured and can be actuated in such a way that it can also assume the function of the partially power-shifting element.

3. Drive system according to either of the preceding claims, **characterized in that** the partially power-shifting element is configured as a multiple disc brake.

4. Drive system according to one of the preceding claims, **characterized in that** each drive train, the electric drive machine of which is fed via the common AC converter, has a partially power-shifting element.

5. Drive system according to one of the preceding claims, **characterized in that** the drive system comprises an electronic control device, a rotational speed sensor for detecting the respective output rotational speed at each drive train, and in each case one actuator for actuating the positively locking shifting element of each shifting transmission, and **in that** the electronic control device is connected in a signal-transmitting manner to the rotational speed sensors and to the actuators.

6. Drive system according to Claim 5, **characterized in that** the drive system in each case comprises a further actuator for actuating each partially load-shifting element, and **in that** each of the further actuators is connected in a signal-transmitting manner to the electronic control device.

7. Method for controlling a shifting operation in a drive system according to Claim 5 or 6, **characterized by** the following method steps:
a) the electric drive machines are fed via the common AC converter in such a way that the transmission input torque at the shifting clutches in the shifting transmissions is equal to zero or at least lies below a maximum permissible transmission input torque for shifting of the respective positively locking shifting clutch;
b) the positively locking shifting clutches are shifted into a neutral position;
c) the output rotational speed is detected individually at each drive train and is conducted to the electronic control device;
d) an input rotational speed which is predetermined by the common AC converter and the output rotational speeds are roughly synchronized jointly by way of the electric drive machines at all positively locking shifting clutches;
e) the input rotational speed and the respective output rotational speed are precisely synchronized at each positively locking shifting clutch separately by way of the respectively associated partially power-shifting element;
f) the positively locking shifting clutches are closed.

8. Method according to Claim 7, **characterized in that**, for the rough synchronization in method step d), a first common target rotational speed window is predetermined for the input rotational speed of all jointly actuated drive trains, and **in that**, for the precise synchronization in method step e), a separate second target rotational speed window is predetermined for the input rotational speed at each of the positively locking shifting clutches, the first target rotational speed window being broader than the second target rotational speed windows.

9. Method according to Claim 8, **characterized in that**, when the first target rotational speed window is reached at at least one of the positively locking shifting clutches, the following method step of the precise synchronization is introduced, by the respective further actuator for actuating the associated partially power-shifting element being actuated by the control device in such a way that the precise synchronization takes place.

10. Method according to Claim 8 or 9, **characterized in that**, when the second target rotational speed window is reached at one of the positively locking shifting clutches, the respectively associated actuator is actuated by the control device in order to close the respective shifting clutch.

11. Method according to one of the preceding claims, **characterized in that** individual method steps are delayed by the electronic control device in such a way that the traction power interruptions in the respective drive system are minimized, by the switchover of the individual shifting clutches of the drive system taking place one after another.

## Revendications

1. Système d'entraînement d'un véhicule ferroviaire, ledit système comprenant une pluralité de chaînes cinématiques qui comportent chacune une machine d'entraînement électrique (2, 22) et une boîte de vitesses (3, 23) munie d'au moins un embrayage à complémentarité de formes (9, 29) destiné réaliser une pluralité de rapports de transmission, les machines d'entraînement électriques étant alimentées par le biais d'un convertisseur alternatif commun, **caractérisé en ce qu'**au moins une chaîne cinématique du système d'entraînement comporte un élément de commutation à charge partielle destiné à synchroniser une vitesse de rotation d'entrée avec une vitesse de rotation de sortie au niveau de l'embrayage à complémentarité de formes et **en ce que** l'élément de commutation à charge partielle (13, 14, 33, 34) est disposé dans une zone de sortie de la chaîne cinématique, c'est-à-dire entre l'embrayage à complémentarité de formes de la boîte de vitesses et au moins une roue de rail.

2. Système d'entraînement selon la revendication 1, **caractérisé en ce qu'**un frein de service du véhicule ferroviaire est conçu et commandable de manière à pouvoir également prendre en charge la fonction de l'élément de commutation à charge partielle.

3. Système d'entraînement selon l'une des revendications précédentes, **caractérisé en ce que** l'élément de commutation à charge partielle est conçu comme un frein à disques multiples.

4. Système d'entraînement selon l'une des revendications précédentes, **caractérisé en ce que** chaque chaîne cinématique, dont la machine d'entraînement électrique est alimentée par le biais du convertisseur alternatif commun, comporte un élément de commutation à charge partielle.

5. Système d'entraînement selon l'une des revendications précédentes, **caractérisé en ce que** le système d'entraînement comprend un dispositif de commande électronique, un capteur de vitesse de rotation destiné à détecter la vitesse de rotation de sortie respective au niveau de chaque chaîne cinématique et un actionneur destiné à actionner l'élément de commutation à complémentarité de formes de chaque boîte de vitesses, et **en ce que** le dispositif de commande électronique est relié en transmission de signal aux capteurs de vitesse de rotation et aux actionneurs.

6. Système d'entraînement selon la revendication 5, **caractérisé en ce que** le système d'entraînement comprend un autre actionneur destiné à actionner chaque élément de commutation à charge partielle, et **en ce que** chacun des autres actionneurs est relié en transmission de signal au dispositif de commande électronique.

7. Procédé de commande d'un processus de commutation dans un système d'entraînement selon la revendication 5 ou 6, **caractérisé par** les étapes de procédé suivantes :
a) les machines d'entraînement électrique sont alimentées par le biais du convertisseur alternatif commun de telle sorte que, au niveau des embrayages des boîtes de vitesses, le couple d'entrée soit égal à zéro ou au moins inférieur à un couple d'entrée maximal qui est autorisé pour commuter l'embrayage à complémentarité de formes ;
b) les embrayages à complémentarité de formes sont commutés en position neutre ;
c) la vitesse de rotation de sortie est détectée individuellement au niveau de chaque chaîne cinématique et envoyée au dispositif de commande électronique ;
d) une vitesse de rotation d'entrée spécifiée par le convertisseur alternatif commun et les vitesses de rotation de sortie sont grossièrement synchronisées conjointement par les machines d'entraînement électrique au niveau de tous les embrayages à complémentarité de formes ;
e) la vitesse de rotation d'entrée et la vitesse de rotation de sortie respective sont finement synchronisées séparément au niveau de chaque embrayage à complémentarité de formes par l'élément de commutation à charge partielle respectivement associé ;
f) les embrayages à complémentarité de formes sont fermés.

8. Procédé selon la revendication 7,
**caractérisé en ce que**, pour effectuer une synchronisation grossière à l'étape du procédé d), une première fenêtre de vitesse de rotation cible commune est spécifiée pour la vitesse de rotation d'entrée de toutes les chaînes cinématiques commandées conjointement, et **en ce que**, pour effectuer une synchronisation fine à l'étape e) du procédé, une deuxième fenêtre de vitesse de rotation cible distincte est spécifiée pour la vitesse de rotation d'entrée au niveau de chaque embrayage à complémentarité de formes, la première fenêtre de vitesse de rotation cible étant plus large que la deuxième fenêtre de vitesse de rotation cible.

9. Procédé selon la revendication 8,
**caractérisé en ce que**, lorsque la première fenêtre de vitesse de rotation cible est atteinte au niveau de l'un au moins des embrayages à complémentarité de formes, l'étape de procédé suivante de synchronisation fine est démarrée par commande de l'autre actionneur respectif destiné à actionner l'élément de commutation à charge partielle associé au moyen du dispositif de commande de façon à effectuer une synchronisation fine.

10. Procédé selon la revendication 8 ou 9, **caractérisé en ce que**, lorsque la deuxième fenêtre de vitesse de rotation cible est atteinte au niveau de l'un des embrayages à complémentarité de formes, l'actionneur respectivement associé est commandé par le dispositif de commande pour fermer l'embrayage respectif.

11. Procédé selon l'une des revendications précédentes, **caractérisé en ce que** les étapes de procédé individuelles sont retardées par le dispositif de commande électronique de façon à minimiser l'interruption de force de traction dans le système d'entraînement respectif par commutation des embrayages individuels du système d'entraînement les uns après les autres.
